# EUROPÄISCHE PATENTSCHRIFT

(11) **EP 1 526 973 B1**
(45) Veröffentlichungstag und Bekanntmachung des Hinweises auf die Patenterteilung: **30.09.2009**
(21) Anmeldenummer: 03747801.3
(22) Anmeldetag: 08.08.2003
(51) Int. Cl.: B44C 1/17, B44F 1/10

(54) **TEILSTRUKTURIERTE, IN DER FORM DEKORIERBARE MEHRSCHICHTFOLIE**
PARTIALLY STRUCTURED MULTILAYERED FILM WHOSE FORM CAN BE DECORATED
FILM MULTICOUCHE A STRUCTURE PARTIELLE, POUVANT ETRE DECORE DANS LE MOULE

(30) Priorität: 10.08.2002 DE 10236810
(43) Veröffentlichungstag der Anmeldung: 04.05.2005
(73) Patentinhaber: Leonhard Kurz Stiftung & Co. KG, 90763 Fürth (DE)
(72) Erfinder: HEINRICH, Matthias, 90431 Nürnberg (DE); HIRSCHFELDER, Andreas, 90766 Fürth (DE)
(74) Vertreter: LOUIS, PÖHLAU, LOHRENTZ
(86) Internationale Anmeldenummer: PCT/DE2003/002683
(87) Internationale Veröffentlichungsnummer: WO 2004/020222

(56) Entgegenhaltungen:
- EP-A- 0 677 400
- US-A- 5 635 282
- US-A- 5 714 231
- US-A1- 2001 046 015
- US-B1- 6 309 497

## Beschreibung

Die Erfindung betrifft einen dekorierten Gegenstand, insbesondere eine HandySchale oder ein Handy-Fenster, der einen Grundkörper und ein auf der Oberfläche des Grundkörpers angeordnetes dekoratives Element aufweist. Die Erfindung betrifft weiter eine Mehrschichtfolie zur Herstellung von dekorierten Gegenständen.

Ein Inmold-Verfahren, mit dem es möglich ist, mittels einer Folie dekorierte Kunststoffgegenstände herzustellen, wird in WO 93/04837 offenbart.

Zwischen zwei Formhälften einer Spritzguß-Form wird eine Folie angeordnet. Die beiden Formhälften werden unter Ausbildung eines Hohlraums gegeneinander bewegt. Hierbei wird die Folie zwischen den beiden Formhälften festgeklemmt. Durch mindestens einen in der Form ausgebildeten Angußkanal wird danach in den Formhohlraum ein Kunststoff-Material eingespritzt. Der durch den Angußkanal bestimmte, mit dem Kunststoff-Gegenstand verbundene Kunststoffanguß wird von dem Kunststoff-Gegenstand abgetrennt, bevor das Kunststoff-Material in der Form aushärtet. Nach Abtrennen des noch nicht ausgehärteten Angusses vom noch nicht ausgehärteten Kunststoff-Gegenstand härtet das Kunststoff-Material in der geschlossenen Form aus. Danach wird die Form geöffnet und der ausgehärtete fertig dekorierte Kunststoff-Gegenstand aus dem Formhohlraum und der davon abgetrennt ausgehärtete Anguß aus dem Angußkanal entfernt.

Die Folie wird bei dem Einspritzen des Kunststoff-Materials von dem heißen Kunststoff-Material gegen einen Oberflächenbereich des Formhohlraums gepreßt. Dadurch nimmt die Prägefolie die Oberflächengestalt des Formhohlraums an und verbindet sich mit dem Kunststoff-Material, das den Grundkörper des dekorierten Kunststoff-Gegenstandes bildet.

Ein weiteres Inmold-Verfahren ist aus EP 0412493A2 bekannt.

Bei diesem Verfahren wird eine Karte, beispielsweise eine Ausweis-, Kredit- oder Zeiterfassungskarte, unter Verwendung einer Folie hergestellt. Die Folie weist eine Dekorlage mit zwei Dekorschichten und zwischen diesen eine opake Zwischenschicht auf. Als Spritzgußmaterial wird eine glasklare Masse verwendet. Die Folie wird in einem der Karte volumenmäßig entsprechenden Hohlraum einer Spritzguß-Form angeordnet. Der Hohlraum der Form wird dann verschlossen und mit dem Spritzgußmaterial befüllt.

DE 2649479A1 beschreibt eine Heißprägefolie, die wie folgt aufgebaut ist:

Die Heißprägefolie besteht aus einer Trägerfolie, einer Decklackschicht und einer Klebeschicht. Auf der der Trägerfolie gegenüberliegenden Oberfläche der Decklackschicht sind eine Metallschicht sowie eine Haftermittlungslage angeordnet. Auf der Haftermittlungslage ist eine Klebeschicht aufgebracht. Die Decklackschicht ist transparent ausgebildet und auf ihrer der Trägerfolie gegenüberliegenden Oberfläche mit einer räumlichen Musterung versehen.

Der Erfindung liegt die Aufgabe zugrunde, die Dekoration von Gegenständen mittels einer Mehrschichtfolie weiter zu verbessern.

Diese Aufgabe wird durch einen dekorierten Gegenstand, insbesondere eine Handy-Schale oder ein Handy-Fenster, gelöst, der einen Grundkörper, der gekrümmte Oberflächen-Bereiche aufweist, und mindestens ein im Bereich einer oder mehrerer Krümmungen der Oberfläche des Grundkörpers angeordnetes dekoratives Elemente aufweist, wobei das dekorative Element von einer IMD-Folie oder einer tiefziehfähigen Folie gebildet ist, die bei der Herstellung des Grundkörpers entsprechend der ein oder mehreren Krümmungen verformt wird, und die IMD-Folie oder tiefziehfähige Folie eine transparente Strukturschicht, die eine einen optisch wahrnehmbaren Effekt erzeugende räumliche Struktur aufweist, und eine zwischen der Oberfläche des Grundkörpers und der Strukturschicht angeordnete Reflexionsschicht aufweist. Diese Aufgabe wird weiter von einer Mehrschichtfolie zur Herstellung von dekorierten Gegenständen mit gekrümmten Oberflächen-Bereichen gelöst, die eine IMD-Folie oder eine tiefziehfähige Folie ist, die bei der Herstellung des Gegenstandes entsprechend der Krümmung des Grundkörpers des dekorierten Gegenstandes verformt wird, wobei die IMD-Folie oder tiefziehfähige Folie eine transparente Strukturschicht, die eine einen optisch wahrnehmbaren Effekt erzeugende räumliche Oberflächenstruktur aufweist, und eine in Betrachtungsrichtung unterhalb der Strukturschicht angeordnete Reflexionsschicht aufweist.

Die Erfindung bringt den Vorteil mit sich, dass die Anzahl der zur Verfügung stehenden Dekorationselemente vergrößert und damit der einem Designer zur Verfügung stehende Formenschatz vergrößert.

Besondere Vorteile ergeben sich hierbei, wenn der durch die räumliche Struktur erzeugte optische Effekt in Bereichen ausgelöscht wird, in denen der Grundkörper gekrümmt ist.

IMD-Folien (IMD = Inmold) und tiefziehfähige Folien sind bei der Dekorierung von Gegenständen hohen Temperaturen und hohen mechanischen Kräften ausgesetzt. Insbesondere die bei dem Dekorierungsprozeß auftretenden mechanischen Verformungen führen dazu, daß eine Dekorierung mit einer einen optisch wahrnehmbaren Effekt erzeugenden räumlichen Struktur oft zu unbefriedigenden Ergebnissen führt. Durch die Verzerrung der IMD-Folie oder tiefziehfähigen Folie wird auch die Strukturschicht verzerrt und damit auch die auf der Strukturschicht aufgebrachten räumlichen Strukturen verändert. Diese Verzerrungen sind besonders stark in Bereichen, in denen der Grundkörper ein oder mehrere Krümmungen aufweist. Untersuchungen haben gezeigt, dass in diesen Bereichen besonders starke Veränderungen der räumlichen Struktur der Strukturschicht auftreten. Durch diese Veränderungen der räumlichen Struktur wird der durch die räumliche Struktur erzeugte optisch wahrnehmbare Effekt unter Umständen stark verfälscht, so dass sich ein unansehnliches optisches Gesamtergebnis ergibt.

Dieser Effekt tritt jedoch nicht bei dem nach der Erfindung ausgeführten "Auslöschungsschritt" auf.

Das Auslöschen des optischen Effekts der räumlichen Struktur in Krümmungsbereichen wird hierbei vorzugsweise dadurch erzielt, dass der optische Effekt der räumlichen Struktur musterförmig mittels einer zwischen der Strukturschicht und der Reflexionsschicht angeordneten musterförmig ausgeformten Zwischenschicht und/oder mittels einer musterförmigen Entfernung, insbesondere Demetallisierung, der Reflexionsschicht in Bereichen ausgelöscht ist, in denen die Krümmung der Oberflächenstruktur einen Grenzwert überschreitet.

Hierdurch ergeben sich erhebliche Vorteile gegenüber anderen denkbaren Methoden, beispielsweise einer grundkörper-spezifischen Gestaltung der Oberflächenstruktur:

So können die für die Herstellung von 3-D Musterteilen verwendeten Prägewerkzeuge vielseitiger eingesetzt werden. Durch das musterförmige Auslöschen des optisch wahrnehmbaren Effekts in Teilbereichen der räumlichen Struktur kann die räumliche Struktur in vielfältiger Art und Weise verändert und individualisiert werden. Damit sind mittels eines Prägewerkzeugs eine Vielzahl von unterschiedlichen Dekorationen realisierbar. Dies führt zu erheblichen Kosteneinsparungen.

Durch partielles Auslöschen der Strukturschicht können weiter zusätzliche dekorative Elemente erzeugt werden, die die Verwendung eines IMD-Verfahrens (IMD= Inmold) oder eines mit einer tiefziehfähigen Folie versehenen dekorierten Gegenstandes signifikant verbessern. Der optische Effekt der räumlichen Struktur kann beispielsweise in Bereichen ausgelöscht werden, in denen die Krümmung der Struktur einen Grenzwert überschreitet. Negative Auswirkungen eines zu hohen Krümmungsradius auf das optische Erscheinungsbild der Dekoration lassen sich auf diese Weise unterbinden, wodurch sich das optische Erscheinungsbild des dekorierten Gegenstandes verbessert.

Wird eine Strukturschicht aus biegestabilem Kunststoff-Material verwendet, so ist es vorteilhaft, als Grenzwert den Krümmungsradius zu verwenden, bei dem sich für einen Betrachter sichtbare Veränderungen des optischen Effektes der räumlichen Struktur durch die Verbiegung der Strukturschicht ergeben.

Bei der Verwendung eines nicht biegestabilen Kunststoffmaterials für die Strukturschicht hat es sich weiter als vorteilhaft gezeigt, als Grenzwert den Krümmungsradius der Strukturschicht zu wählen, bei dem Brüche in der Strukturschicht auftreten.

Gemäss eines weiteren bevorzugten Ausführungsbeispiels der Erfindung weist die Strukturschicht Soll-Bruchstellen auf, so dass die Strukturschicht in Bereichen, in denen der Grundkörper ein oder mehrere Krümmungen aufweist und damit auch die Strukturschicht entsprechend gekrümmt ist, definiert zerbricht. Auch hier ist es sinnvoll, die Soll-Bruchstellen derart vorzusehen, dass das Zerbrechen in vordefinierte Bruchstücke ab einem vordefinierten Krümmungsradius vonstatten geht. Die Sollbruch-Stellen sind hierbei vorzugsweise derart angeordnet, dass der durch die Struktur erzeugte optische Effekt durch das Brechen der Strukturschicht im Bereich der Sollbruch-Stellen nicht beeinträchtigt wird. Der von der Strukturschicht erzeugte optische Effekt wird demnach im Bereich der Krümmung nicht ausgelöscht, sondern bleibt erhalten.

Weiter ist es auch möglich, dass die Soll-Bruchstellen so angeordnet sind, dass der optische Effekt in Bereichen, in denen die Strukturschicht zerbrochen ist, nicht mehr erzeugt wird.

Gemäss eines weiteren bevorzugten Ausführungsbeispiels der Erfindung weist die Reflexionsschicht Soll-Bruchstellen auf, so dass die Reflexionsschicht in Bereichen, in denen die Krümmung des Grundkörpers und damit auch die Krümmung der Reflexionsschicht einen bestimmten Grenzwert überschreitet, definiert zerbricht, wobei der durch die Struktur erzeugte optische Effekt in diesem Bereich optisch nicht mehr sichtbar ist und damit ausgelöscht wird.

Gemäss eines weiteren bevorzugten Ausführungsbeispiels der Erfindung ist zwischen der Strukturschicht und der Reflexionsschicht eine weitere Schicht mit höherem Brechungsindex als die Strukturschicht angeordnet. Durch diese zusätzliche Schicht wird der optische Tiefeneindruck verstärkt, was die optische Wirkung des dreidimensionalen dekorierten Gegenstandes sehr verbessert. Besonders vorteilhaft ist es hier, wenn diese weitere Schicht aus einem Material besteht, das thermisch isolierende Eigenschaften besitzt. Durch diese thermisch isolierenden Eigenschaften wird die Verarbeitung der IMD-Folie oder tiefziehfähigen Folie verbessert, da der thermische Einfluss auf die Strukturschicht bei der Verarbeitung der IMD-Folie oder tiefziehfähigen Folie verringert wird. Das thermische Bearbeitungsfenster erhöht sich und eine Schädigung der räumlichen Struktur, welche zur Verfälschung des durch die räumliche Struktur erzeugten optischen Effekts führt, wird vermieden.

Besondere Vorteile ergeben sich hier auch, wenn die Reflexionsschicht hierbei in einem fensterförmigen Bereich entfernt wird, so dass sich in diesem Bereich ein halbtransparentes und/oder transparentes Fenster bildet. Dieses halbtransparente Fenster kann hierbei insbesondere in solchen Bereichen vorgesehen sein, in denen unterhalb dieses Fensters eine optische Anzeigeeinrichtung, beispielsweise eine LCD-Display (LCD = Liquid Cristall Display) vorgesehen ist.

Eine besonders kostengünstige und einfach zu realisierende Ausführungsform der Erfindung besteht darin, eine aus einer oder mehreren Löschlackschichten bestehende Zwischenschicht zu verwenden, wobei die Löschlackschicht aus einem transparenten Material besteht und die Struktur der Strukturschicht musterförmig nivelliert. Durch diese Nivellierung der Struktur wird die Struktur musterförmig optisch ausgelöscht. Eine weitere Möglichkeit besteht darin, die Löschlackschichten aus einem opaken Material herzustellen. Die Löschlackschichten können mittels eines Druckverfahrens aufgebracht werden, so daß die Herstellung besonders kostengünstig ist.

Es ist vorteilhaft, die Zwischenschicht aus einem biegsamen, thermoplastischen Material auszuformen. Hierdurch kann sich die Zwischenschicht besonders einfach an einen gekrümmten Grundkörper anpassen. Weitere Vorteile werden dadurch erreicht, indem die Biegsamkeit der Zwischenschicht von der der Strukturschicht verschieden ist. Die Zwischenschicht bleibt so auch bei kleinen Biegeradien, die zu einem Bruch der Strukturschicht führen, erhalten und kann ihre Funktion somit gerade in den kritischen Bereichen erbringen, in denen der Einsatz einer Zwischenschicht besonders vorteilhaft ist.

Dekorative Vorteile ergeben sich durch die Einfärbung der Zwischenschicht und/oder der Strukturschicht, durch die Einfärbung einer Schutzlackschicht und durch die Verwendung von ein oder mehreren dekorativen Farbschichten in dem Aufbau der Mehrschichtfolie.

Besonders gute Ergebnisse werden erreicht, wenn die Strukturschicht aus einem geeigneten thermoplastischen Kunststoff-Material besteht, in das die räumlichen Strukturen eingeprägt sind. Durch diese Ausgestaltung der Strukturschicht kann diese sich besonders einfach an die Oberfläche von gekrümmten Grundkörpern anpassen. Die Verwendung eines geeigneten thermoplastischen Kunststoff-Materials hat des weiteren den Vorteil, daß die eingeprägten räumlichen Strukturen nicht verzerrt werden und somit der durch die räumliche Struktur erzeugte optisch wahrnehmbare Effekt bei der Biegung der Strukturschicht nicht verfälscht wird. Damit wird das für einen Betrachter wahrnehmbare Gesamtergebnis bei der Dekorierung von gekrümmten Oberflächenbereichen, insbesondere unter Verwendung eines Inmold-Verfahrens, signifikant verbessert.

Für die Dekorierung von Gegenständen besonders interessante optische Effekte lassen sich durch die Verwendung von Strukturen erreichen, die eine nicht beugungsoptische Struktur einer Rauhtiefe in der Größenordnung zwischen 0,8 und 10 µm aufweist. Derartige Strukturen sind auch besonders wenig anfällig für die oben beschriebenen, durch den gekrümmten Grundkörper bewirkten negativen optischen Effekte.

Es kann aber auch zweckmäßig sein, die Struktur mit einer beugungsoptisch wirksam diffraktiven Struktur zu versehen. Dadurch lassen sich dekorative Effekte wie Hologramme und dergleichen erzeugen.

Eine besonders kratzstabile Oberfläche wird dadurch erreicht, daß die Mehrschichtfolie eine in Betrachtungsrichtung oberhalb der Strukturschicht angeordnete Schutzlackschicht aufweist und die räumliche Struktur zur Reflexionsschicht hin auf die Strukturschicht aufgebracht ist.

Zweckmässig ist es hier, wenn die Schutzlackschicht der Mehrschichtfolie eingefärbt ist. Weitere Vorteile lassen sich hierdurch erzielen, dass die Mehrschichtfolie eine oberhalb der Strukturschicht angeordnete Schutzlackschicht aufweist und weiter ein oder mehrere zwischen der Schutzlackschicht und der Reflexionsschicht angeordnete dekorative Farbschichten aufweist.

Weiter ist es vorteilhaft, eine Laminierfolie oder eine Überprägfolie mit einer Strukturschicht im Sinne der Erfindung für den IMD-Bereich zu benutzen.

Im folgenden wir die Erfindung anhand von mehreren Ausführungsbeispielen unter Zuhilfenahme der beiliegenden Zeichnungen beispielhaft erläutert.

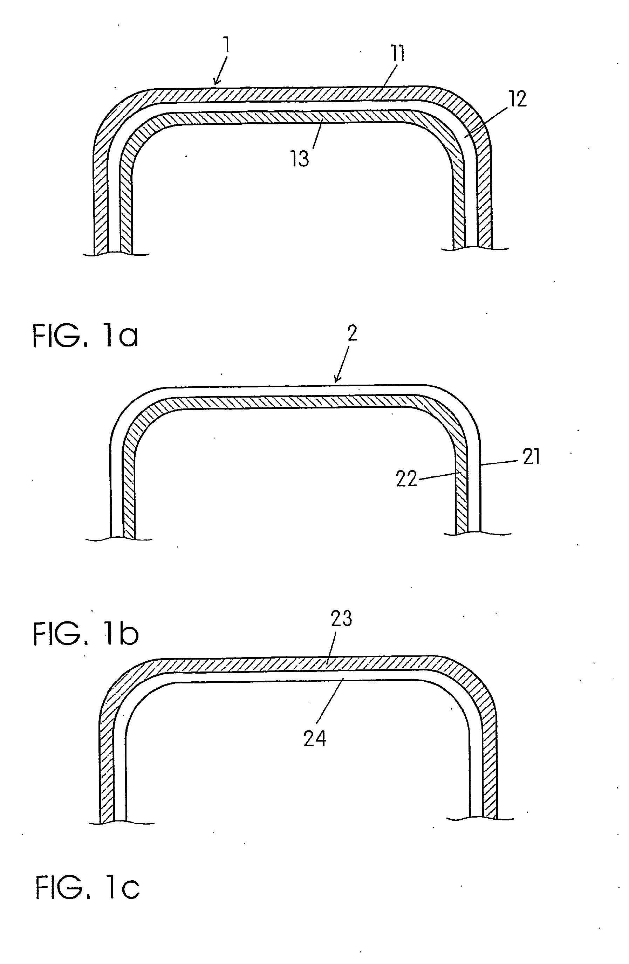

- Fig. 1a: zeigt eine Schnittdarstellung eines erfindungsgemäß dekorierten Gegenstandes für ein erstes Ausführungsbeispiel.
- Fig. 1 b: zeigt eine Schnittdarstellung eines erfindungsgemäßen dekorierten Gegenstandes für ein zweites Ausführungsbeispiel.
- Fig. 1c: zeigt eine Schnittdarstellung eines erfindungsgemäßen dekorierten Gegenstandes für ein drittes Ausführungsbeispiel.
- Fig. 2: zeigt eine Schnittdarstellung eines ersten Ausführungsbeispiels einer erfindungsgemäßen Mehrschichtfolie.
- Fig. 3: zeigt eine Schnittdarstellung eines zweiten Ausführungsbeispiels einer erfindungsgemäßen Mehrschichtfolie.
- Fig. 4a: zeigt eine Darstellung des prinzipiellen Aufbaus einer erfindungsgemäßen Mehrschichtfolie für ein weiteres Ausführungsbeispiel der Erfindung.
- Fig. 4b: zeigt eine Darstellung des prinzipiellen Aufbaus einer erfindungsgemäßen Mehrschichtfolie für ein weiteres Ausführungsbeispiel der Erfindung.
- Fig. 5: zeigt eine Darstellung eines Teils eines erfindungsgemäßen dekorierten Gegenstandes gemäß einem weiteren Ausführungsbeispiel der Erfindung.

Fig. 1 a zeigt einen Teil eines dekorierten Gegenstandes 1. Bei dem dekorierten Gegenstand 1 handelt es sich um eine Handyschale und/ oder um ein Handy-Fenster. Es ist natürlich auch möglich, daß es sich bei dem dekorierten Gegenstand 1 um ein andersartig gestaltetes Gehäuseteil oder auch um einen flachen Gegenstand, beispielsweise eine Karte, handelt.

Der dekorierte Gegenstand 1 weist einen Grundkörper 13 und eine Mehrschichtfolie 12 auf.

Bei der Mehrschichtfolie 12 handelt es sich um eine IMD-fähige Mehrschichtfolie. Bei der Herstellung des Grundkörpers 13 durch ein Spritzgußverfahren wird die Mehrschichtfolie 12 - wie oben beschrieben - durch die heiße Kunststoff-Masse gegen die Spritzgußform gepreßt, wodurch die Mehrschichtfolie 12 die Oberflächenform des Grundkörpers 13 übernimmt und sich mit dem Grundkörper 13 verbindet. In einem zweiten Schritt oder gleichzeitig wird ein Deckkörper 11 durch ein Spritzgußverfahren auf den von dem Grundkörper 13 und der Mehrschichtfolie 12 bestehenden Verbund aufgespritzt. Hierbei ist es möglich, daß die Mehrschichtfolie 12 bereits vorgeformt ist, in der Mitte einer entsprechend ausgeformten Spritzgußform plaziert wird und beidseitig mit Kunststoff-Spritzmasse hinterspritzt wird.

Bei der Mehrschichtfolie 12 kann es sich hierbei aber auch um eine tiefziehfähige Mehrschichtfolie handeln. IMD-Folien und tiefziehfähige Folien werden beide durch Druck und Wärme in eine dreidimensionale Formgebung gebracht. Bei einer IMD-Folie wird dies durch Hinterspritzen mit Kunststoffmaterial erzielt, das die Folie in die dreidimensionale Formgebung presst. Bei tiefziehfähigen Folien wird die Folie zuerst auf einem planaren Körper aufgebracht, der sodann durch Tiefziehen in die gewünschte dreidimensionale Formgebung gebracht wird. Auch hier wird die Folie entsprechend der Formgebung der Tiefziehform durch Druck und Wärme in eine dreidimensionale Form gebracht.

Fig. 1b zeigt einen alternativen Aufbau eines dekorierten Gegenstandes. Fig. 1b zeigt so einen Teil eines dekorierten Gegenstandes 2, der eine Mehrschichtfolie 21 und einen Grundkörper 22 aufweist. Auch bei der Mehrschichtfolie 21 handelt es sich um eine IMD-fähige Mehrschichtfolie. Diese Prägefolie wird in eine Spritzgußform eingelegt und mit flüssiger Kunststoff-Spritzmasse hinterspritzt, wodurch der dekorierte Gegenstand 2, bestehend aus dem Grundkörper 22, der von der ausgehärteten Spritzgußmasse gebildet wird, und der mit diesem verbundenen Mehrschichtfolie 21, erzeugt wird, die von der durch den Spritzgußprozeß geformten IMD-fähigen Folie gebildet wird.

Es ist auch möglich, die Mehrschichtfolien 12 und 21 durch Aufpressen auf einen vorgeformten Grundkörper mit diesem Grundkörper zu verbinden. Wird dieses Verfahren gewählt, so ist auch der Einsatz von nicht IMD-fähigen Prägefolien möglich. Jedoch ist auch hier der Einsatz von IMD-fähigen Prägefolien zu empfehlen, da ansonsten im Bereich der Krümmungen 19 und 29 mit Verzerrung oder Faltenbildung zu rechnen ist.

Die Mehrschichtfolien 12 und 21 weisen eine transparente Strukturschicht, die eine einen optisch wahrnehmbaren Effekt erzeugende räumliche Struktur aufweist und eine zwischen der Oberfläche des Grundkörpers 13 bzw. 22 und der Strukturschicht angeordnete Reflexionsschicht auf. Der optische Effekt der räumlichen Struktur ist hierbei mittels einer zwischen der Strukturschicht und der Reflexionsschicht angeordneten musterförmig ausgeformten Zwischenschicht und/oder mittels einer Demetallisierung der Reflexionsschicht ausgelöst.

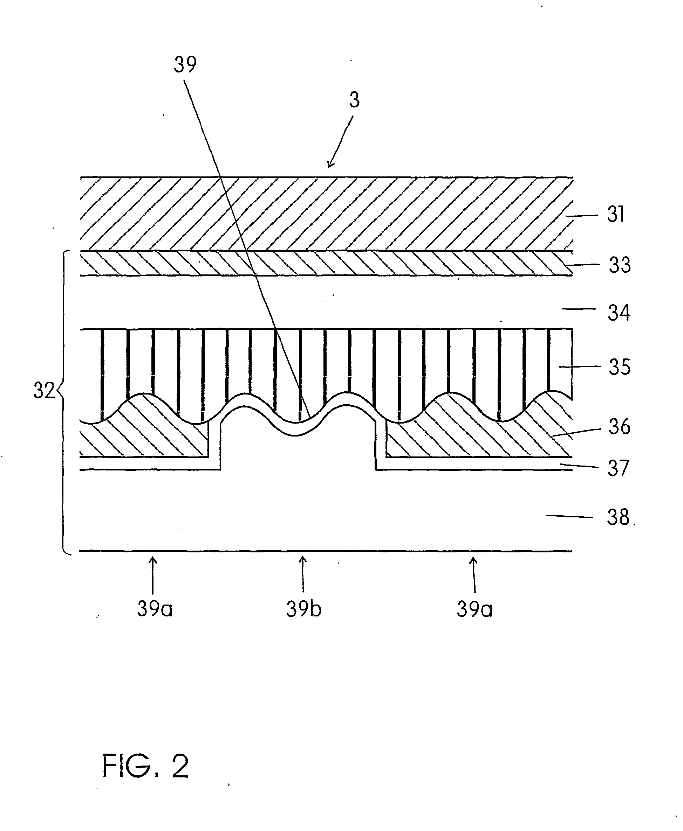

Prinzipielle Möglichkeiten des Aufbaus der Mehrschichtfolien 12 und 21 werden nun anhand der Figuren 2, 3, 4a und 4b erläutert.

Fig. 2 zeigt die Mehrschichtfolie 3, bei der es sich um eine IMD-fähige Mehrschichtfolie handelt. Die Mehrschichtfolie 3 weist einen Träger 31 und ein dekoratives Element 32 auf. Der Träger 31 besteht aus einem PET-Material und wird nach Aufbringen des dekorativen Elements auf den Grundkörper des dekorierten Gegenstandes entfernt. Der Träger 31 weist hierbei eine Schichtstärke von größenordnungsmäßig 4,5 bis 75 µm, vorzugsweise von 23 µm, auf.

Das dekorative Element 32 weist eine Ablöseschicht 33, eine Schutzlackschicht 34, eine Strukturschicht 35 mit einer räumlichen Struktur 39, eine Zwischenschicht 36, eine Reflexionsschicht 37 und eine Klebeschicht 38 auf. Weiter weist das dekorative Element 32 Bereiche 39a und 39b mit unterschiedlichen Eigenschaften auf.

Die Ablöseschicht 33 dient dem Ablösen des dekorativen Elements 32 von dem Träger 31. Die Ablöseschicht 33 besteht beispielsweise aus einem Wachsmaterial. Sie weist eine Schichtstärke von größenordnungsmäßig 0,001 bis 0,1 µm auf.

Die Schutzlackschicht 34 hat eine Schichtstärke, die größenordnungsmäßig im Bereich von 1 bis 20 µm liegt. Bei der Schutzlackschicht 34 handelt es sich vorzugsweise um eine thermoplastische Lackschicht, die eine hohe Abriebfestigkeit aufweist. Weiter kann es sich bei der Schutzlackschicht um einen kaltvernetzten, transparenten Decklack handeln. Die Schutzlackschicht 34 besteht beispielsweise aus PVC, Acrylat, EVA, Polyvinylester, PVB, Polyesterharz, Ketonharz, Formaldehydharz, Kolophoniumharz, Polyurethanharz oder dergleichen.

Die Strukturschicht 35 besteht aus einem thermoplastischen Replizierlack aus einem thermoplastischen Kunststoff. Als Materialien für die Strukturschicht 35 kommen Acrylate und chlorierte Polymere, und insbesondere auch die in Bezug auf die Schutzlackschicht 34 offenbarten Materialien in Betracht.

In die in Richtung der Reflexionsschicht 37 ausgerichtete Oberfläche der Strukturschicht 35 ist die räumliche Struktur 39 eingeprägt. Die räumliche Struktur 39 hat eine Rauhtiefe in der Größenordnung zwischen 0,8 und 10 µm und stellt damit eine nicht beugungsoptisch wirkende Struktur dar. Durch solch eine Struktur wird beispielsweise der Eindruck eines "Bürsteffektes" erzielt.

Es ist jedoch auch möglich, daß die Struktur 39 eine diffraktive Struktur ist. Durch Beugungseffekte werden von solche einer diffraktiven Struktur beispielsweise Hologramme erzeugt. Weiter ist es möglich, daß die Struktur 39 eine Mattstruktur aufweist, die streuende Eigenschaften hat.

Die Schicht 37 besteht aus einem hochbrechenden Material und hat größenordnungsmäßig eine Schichtdicke von 100 Å. Die Schicht 37 kann von einem Metalloxid und/oder von einem Metallsulfid gebildet werden. Hierbei kann es sich auch um Zinksulfide, Titanoxid, Siliciumoxid und dergleichen handeln. Die Schicht 37 ist vorzugsweise von einer Metallschicht gebildet, die reflektierende Eigenschaften hat. Als Materialien hierfür können beispielsweise Chrom, Aluminium, Kupfer, Silber, Gold oder ähnliche Metalle, aber auch Legierungen aus zwei oder mehr dieser Metalle verwendet werden. Weiter können als Material für die Schicht 37 auch reflektierende Kunststoffe oder Polymere verwendet werden. Hierbei können Verbindungen ähnlich wie "Liquid Cristals" (beispielsweise "Helicone" von Wacker-Chemie; "Helicone" ist eine Marke der Wacker-Chemie) zum Einsatz kommen.

Die Verwendung einer Metallschicht als Schicht 37 hat den Vorteil, daß eine solche Metallschicht über eine hohe Biege- und Dehnfähigkeit verfügt und somit für den IMD-Einsatzbereich besonders geeignet ist.

Die Zwischenschicht 36 besteht aus einem transparenten Löschlack. Als Löschlack können hierbei dieselben Materialien verwendet werden, die auch für die Strukturschicht 35 verwendet werden. Der Löschlack besteht somit vorzugsweise aus einem thermoplastischen Kunststoff-Material.

Es ist hierbei vorteilhaft, daß für die Zwischenschicht 36 ein Material verwendet wird, das über im wesentlichen identische optische Eigenschaften wie das für die Strukturschicht 35 verwendete Material verfügt. Insbesondere sollten die Brechungsindizes der beiden verwendeten Materialien weitgehend übereinstimmen. Damit wird erreicht, daß an dem Übergang zwischen der Strukturschicht 35 und der Zwischenschicht 36 keine oder fast keine Reflexionen stattfinden und somit dieser Übergang aus optischer Sicht vernachlässigbar ist.

Die Dicke der Strukturschicht 35 und der Zwischenschicht 36 liegt größenordnungsmäßig jeweils in dem Bereich von 1 bis 10 µm.

Die Klebeschicht 38 besteht aus einem üblichen, durch Wärme, Druck oder Strahlung aktivierbaren Kleber. Die Klebeschicht 38 hat eine Schichtdicke, die größenordnungsmäßig im Bereich zwischen 1 bis 10 µm liegt. Es ist auch möglich, auf die Klebeschicht 38 zu verzichten oder mehrere Klebeschichten auf die Reflexionsschicht 37 aufzubringen.

Bei der Herstellung der Mehrschichtfolie 3 wird wie folgt vorgegangen:

Auf den Träger 3 werden nacheinander die Ablöseschicht 33, die Schutzlackschicht 34 und die Strukturschicht 35 mittels eines Druckverfahrens vollflächig aufgebracht. Auch ein partielles Aufbringen dieser Schichten ist möglich. Anschließend werden die räumlichen Strukturen 39 mittels eines Prägewerkzeugs in die Strukturschicht 35 eingeprägt. Die Struktur 39 wird hierbei vorzugsweise vollflächig auf die Strukturschicht 35 aufgeprägt. Als Prägewerkzeuge können beispielsweise ein oder mehrere Prägewalzen verwendet werden.

Auf die so hergestellte "Grundfolie" wird nun die Zwischenschicht 36 musterförmig und partiell aufgedruckt. Dieses Aufdrucken kann beispielsweise mittels einer entsprechend ausgestalteten Tiefdruckwalze erfolgen. Das Ergebnis dieses musterförmigen Aufdruckens ist beispielhaft in Fig. 2 gezeigt: In den Bereichen 39a ist die Zwischenschicht 36 aufgedruckt und in dem Bereich 39b fehlt die Zwischenschicht 36.

Es ist auch möglich, die Zwischenschicht 36 vollflächig auf die Strukturschicht 35 aufzudrucken. Sodann wird sie teilweise mittels eines Wasch- und/ oder Ätzvorgangs (Positiv- oder Negativätzung) oder mittels Ablation (Laserablation) entfernt.

Anschließend wird die Reflexionsschicht 37, vorzugsweise durch Bedampfen oder Kathodenzerstäubung, aufgebracht.

Es ist hierbei auch möglich, auf die Ablöseschicht 33 und die Schutzlackschicht 34 zu verzichten.

Wird die Mehrschichtfolie 3 für die Dekoration des in Fig. 1c dargestellten Gegenstandes verwendet, so ist es vorteilhaft, auf die Schutzlackschicht 34 zu verzichten. Die Funktion der Schutzlackschicht 34 wird in diesem Falle von dem Deckkörper erbracht. So zeigt Fig. 1c eine solche Mehrschichtfolie 24, die derart auf der Innenseite eines Deckkörpers 23 aufgebracht ist ("first or second surface decoration").

Weiter ist möglich, zwischen die oben angeführten Schichten 34 bis 37 ein oder mehrere dekorative Farblackschichten einzufügen. Eine weitere Möglichkeit besteht darin, die Schutzlackschicht 34, die Strukturschicht 35 und/oder die Löschlackschicht 36 einzufärben.

Weitere ist es auch möglich, die Schichten 35, 36 und 37 wie oben beschrieben aufzubringen und dann partiell durch Waschen oder Ätzen zu entfernen. Weiter ist es möglich, auf die Schichten 35, 36 und 37 partiell einen Ätzresist aufzubringen und dann Schichten partiell durch Waschen oder Ätzen zu entfernen.

Durch den oben beschriebenen Folienaufbau werden folgende optische Effekte erzielt:

In dem Bereich 39b entsteht der Eindruck eines reflektierenden Elements, das von dem von der Struktur 39 erzeugten optischen Effekt überlagert wird. Der Betrachter nimmt somit in dem Bereich 39b ein Hologramm oder eine strukturierte, beispielsweise gebürstete, metallische Oberfläche wahr. In dem Bereichen 39a wird die Struktur 39 von der Zwischenschicht 36 nivelliert. Damit wird der von der räumlichen Struktur 39 erzeugte optische Effekt von der Zwischenschicht 36 ausgelöscht. Der Betrachter nimmt damit in den Bereichen 39a ein reflektierendes dekoratives Element wahr, dem der durch die Struktur 39 erzeugte optische Effekt fehlt.

Weiter ist es möglich, daß die Reflexionsschicht 37 oder die Reflexionsschicht 37 und die Löschlackschicht 36 partiell entfernt werden und damit partiell der Eindruck eines transparenten Elements erzeugt wird, das von dem von der Struktur 39 erzeugten optischen Effekt überlagert wird.

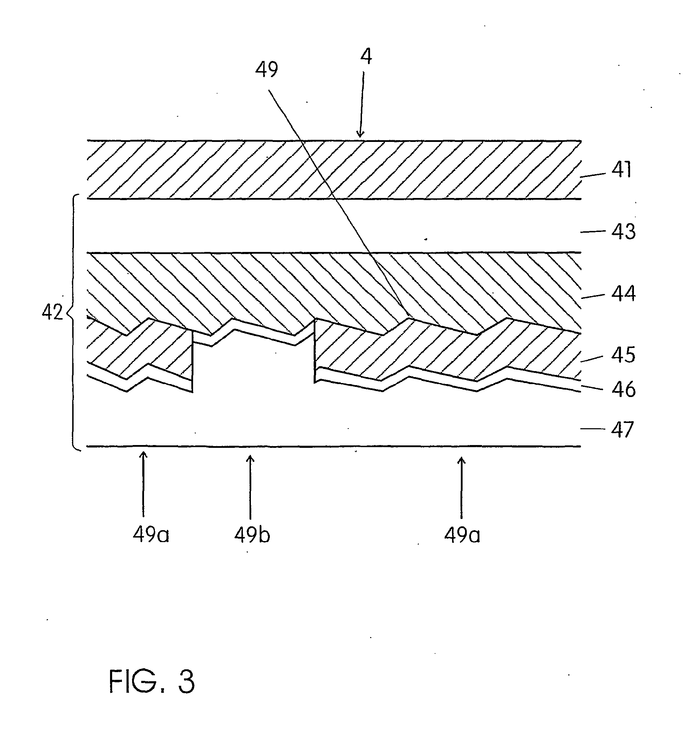

Fig. 3 zeigt eine Mehrschichtfolie 4, die einen Träger 41 und ein dekoratives Element 42 aufweist. Der Träger 41 ist wie der Träger 31 nach Fig. 2 ausgestaltet. Das dekorative Element 42 weist eine Schutzlackschicht 43, eine Strukturschicht 44, eine Zwischenschicht 45, eine Reflexionsschicht 46 und eine Klebeschicht 47 auf.

Die Schichten 44, 46 und 47 sind wie die Schichten 35, 37 und 38 nach Fig. 2 ausgestaltet.

Die Zwischenschicht 45 besteht aus ein oder mehreren Löschlackschichten aus einem opaken Material. Wie in Fig. 3 gezeigt, nivelliert die Zwischenschicht 45 nicht die Struktur 49, sondern hat eine im wesentlichen konstante Schichtdicke.

Dieser Effekt kann sich beispielsweise auch dadurch ergeben, daß die Struktur 49 erst nach Aufbringen der Reflexionsschicht 46 in den bis dahin aufgebauten Folienkörper eingeprägt wird. Für die Zwischenschicht 45 können im wesentlichen dieselben Materialien wie für die Zwischenschicht 36 verwendet werden. Im Gegensatz zu der Zwischenschicht 36 ist die Zwischenschicht 45 jedoch nicht transparent, sondern opak. Die Reflexionsschicht 46 wird damit von der Zwischenschicht 45 derart abgedeckt, daß keine Reflexionen mehr an der Reflexionsschicht 46 stattfinden. Dadurch wird bewirkt, daß der von der Struktur 49 erzeugte optische Effekt in den Bereichen 49a nicht zur Geltung kommt.

Damit ergeben sich für den Betrachter in den Bereichen 49a und 49b folgende Eindrücke: In dem Bereich 49b nimmt der Betrachter ein reflektierendes Element wahr, das von dem durch die Struktur 49 erzeugten optischen Effekt geprägt ist. Er nimmt damit in diesem Bereich beispielsweise ein Hologramm oder eine gebürstete, metallische Oberfläche wahr. In den Bereichen 49a nimmt er eine glatte Oberfläche wahr, die von der Farbe des für die Zwischenschicht 45 verwendeten opaken Materials geprägt wird.

Es ist auch möglich, die Zwischenschicht 45 musterförmig in unterschiedlichen opaken, farbigen Bereichen auszuführen. Für den Betrachter ergibt sich damit in den Bereichen 49a eine entsprechende Farbgestaltung, die nicht von dem von der Struktur 49 erzeugten optischen Effekt überlagert wird.

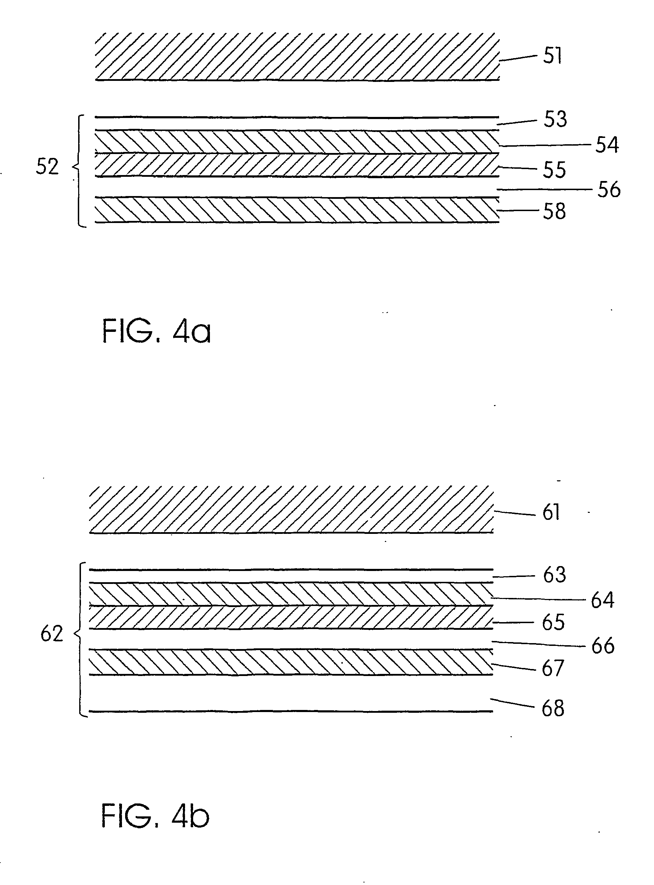

Anhand von Fig. 4a und Fig. 4b werden nun Möglichkeiten erörtert, wie der optische Effekt der räumlichen Struktur musterförmig mittels einer Demetallisierung der Reflexionsschicht ausgelöscht werden kann:

Fig. 4a zeigt einen Träger 51 und eine Mehrschichtfolie 52. Der Träger 51 ist wie der Träger 31 nach Fig. 2 ausgestaltet. Die Mehrschichtfolie 52 weist eine Schutzlackschicht 53, eine Strukturschicht 54, eine Zwischenschicht 55, eine Reflexionsschicht 56 und eine Klebeschicht 58 auf. Die Schichten 53, 54, 56 und 58 sind wie die Schichten 34, 35, 37 und 38 nach Fig. 2 ausgestaltet.

Die Zwischenschicht 55 wird von einem Maskierungslack gebildet, der musterförmig auf die Strukturschicht 54 aufgedruckt wird. Als Maskierungslack kann beispielsweise ein wasserlöslicher Lack (siehe Materialien von Schicht 34) verwendet werden.

Nach dem Aufdrucken des Maskierungslackes wird die Reflexionsschicht 56 aufgebracht. Dies wird beispielsweise mittels des Aufdampfens einer dünnen Metallschicht oder mittels Kathodenzerstäubung realisiert. In einem nächsten Schritt wird der Maskierungslack durch einen Waschvorgang entfernt und damit auch die über dem Maskierungslack liegende reflektierende Schicht entfernt. Sodann wird die Klebeschicht 58 aufgebracht. Als Kleber wird hierbei vorzugsweise ein Kleber verwendet, der im wesentlichen über dieselben optischen Eigenschaften (insbesondere Brechungsindizes) wie die Strukturschicht verfügt. Auf diese Art und Weise treten keine Reflexionen an dem Übergang zwischen der Strukturschicht und der Klebeschicht in den Bereichen auf, in denen die Reflexionsschicht mittels der Maskierungslack-Schicht entfernt worden ist. Weitere Möglichkeiten bestehen darin, die Klebeschicht 58 opak einzufärben oder die Mehrschichtfolie 52 auf einen opaken Grundkörper aufzubringen.

Fig. 4b zeigt einen Träger 61 und eine Mehrschichtfolie 62. Der Träger 61 ist wie der Träger 31 nach Fig. 2 ausgestaltet. Die Mehrschichtfolie 62 weist eine Schutzlackschicht 63, eine Strukturschicht 64, eine Löschlackschicht 65, eine Reflexionsschicht 66, eine Ätzresist-Lackschicht 67 und eine Klebeschicht 68 auf. Die Schichten 63, 64, 65, 66 und 68 sind wie die Schichten 34, 35, 36, 37 und 38 nach Fig. 2 ausgestaltet.

Die Ätzresist-Lackschicht 67 hat eine Dicke, die größenordnungsmäßig im Bereich von 1 bis 10 µm, vorzugsweise im Bereich von 1 bis 2 µm, liegt. Die Ätzresist-Lackschicht 67 wird musterförmig auf die Reflexionsschicht 66 aufgedruckt. Anschließend werden die nicht von der Ätzresist-Lackschicht 67 geschützten Flächenbereiche der Reflexionsschicht 66 mittels einer Lauge oder einer Säure demetallisiert. Auf diese Art und Weise wird wie nach Fig. 4a beschrieben, der von der Struktur der Strukturschicht 64 erzeugte optische Effekt partiell in den

Bereichen ausgelöscht, in denen mittels des Demetallisierungsprozesses die Reflexionsschicht 66 entfernt worden ist.

Weiter ist es auch möglich, die Reflexionsschicht 66 durch Positivätzung (Aufdrucken eines Ätzmittels) oder durch ein Ablationsverfahren musterförmig zu entfernen.

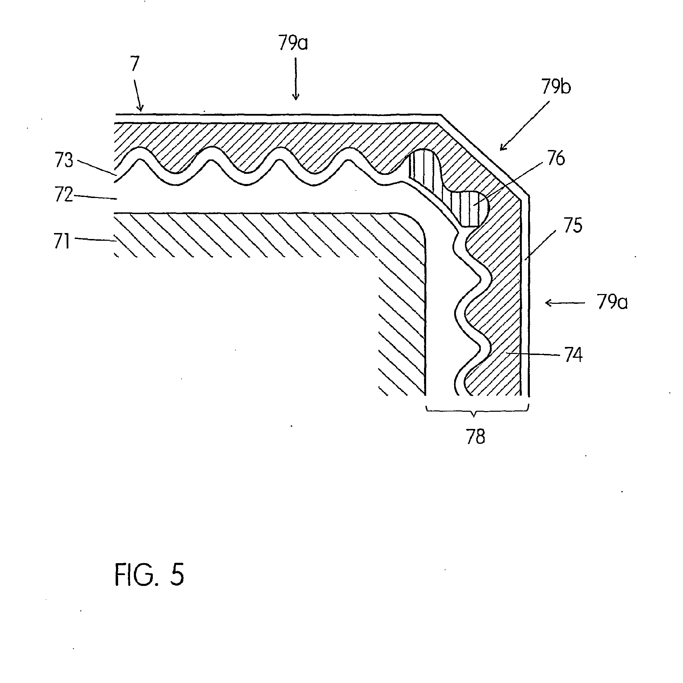

Anhand der Fig. 5 wird nun verdeutlicht, in welchen Bereichen der Strukturschicht nun der optische Effekt der räumlichen Struktur vorzugsweise auszulöschen ist.

Fig. 5 zeigt einen dekorierten Gegenstand 7, der einen Grundkörper 71 und eine auf dem Grundkörper 71 aufgebrachte Mehrschichtfolie 78 aufweist. Die Mehrschichtfolie 78 besteht aus einer Schutzlackschicht 75, einer Strukturschicht 74, einer Zwischenschicht 76, einer Reflexionsschicht 73 und einer Klebeschicht 72. Die Schichten 75, 74, 76, 73 und 72 sind wie die Schichten 34, 35, 36, 37 und 38 nach Fig. 2 ausgestaltet.

Der optische Effekt der räumlichen Struktur wird nun in Bereichen ausgelöscht, in denen die Krümmung der Strukturschicht einen bestimmten Grenzwert überschreitet. In Fig. 5 ist so ein Bereich 79b des dekorierten Gegenstandes 7 gezeigt, in dem der Grundkörper 71 zu einer Kante mit einem recht engen Kantenradius ausgeformt ist.

In dem Ausführungsbeispiel nach Fig. 5 ist die Strukturschicht 74 aus einem biegsamen, thermoplastischen Kunststoff-Material geformt. Wie in Fig. 5 sichtbar ist, wird die Strukturschicht 74 beim Aufbringen auf die Oberfläche des Grundkörpers 71 im Bereich 79b aufgrund des engen Kantenradius des Grundkörpers 71 stark gedehnt, wodurch sich auch gleichzeitig die räumliche Struktur der Strukturschicht 74 in diesem Bereich verformt. Je kleiner der Kantenradius ist, um so stärker ist diese Verdehnung und damit die Veränderung der Strukturschicht 74.

Um nun zu verhindern, daß das optische Erscheinungsbild des Gegenstandes 7 durch diesen Effekt beeinträchtigt wird, ist im Bereich 79b die aus einem Löschlack bestehende Zwischenschicht 76 zwischen die Strukturschicht 74 und die Reflexionsschicht 73 eingebracht. Der in diesem Bereich verfälschte, von der Strukturschicht 74 erzeugte optische Effekt wird durch die Zwischenschicht 76 ausgelöscht, so daß diese Verfälschung der optischen Struktur nicht augenscheinlich wird, sondern vielmehr keine Strukturierungen mehr vorhanden ist.

Der Grenzwert, bei dem, wie in Fig. 5 gezeigt, die Zwischenschicht 76 zwischen die Strukturschicht 74 und die Reflexionsschicht 73 einzubringen ist, wird vorzugsweise durch den Krümmungsradius des Grundkörpers bestimmt, bei dem sich sichtbare Veränderungen des optischen Effektes der räumlichen Struktur durch die Verbiegung der Struktur ergeben. Dieser Radius hängt zum einen von der Größe und Art der räumlichen Struktur, von der Foliendicke der Mehrschichtfolie 78 und von den in den Folienschichten verwendeten Materialien ab. Der Grenzwert kann hierbei durch eine experimentelle Untersuchung, bei der die Mehrschichtfolie 78 mit sich verkleinerndem Radius gebogen wird, auf einfache Weise bestimmt werden.

Der anhand von Fig. 5 verdeutlichte Effekt kann hierbei, auch bei einem analogen Folienaufbau wie nach den Figuren Fig. 1 bis Fig. 5, durch folgende Massnahmen erzielt werden:

Im Gegensatz zu Fig. 5 können beispielsweise für die Strukturschicht 84 nicht ein biegsames thermoplastisches Kunststoffmaterial sondern ein biegestabiles Kunststoffmaterial verwendet werden. Dieses Material hat den Vorteil, dass es sich nur in geringem Masse verformt und damit die Oberflächenstruktur bei Biegung im wesentlichen erhalten bleibt. Weiter sind in der Strukturschicht Soll-Bruchstellen vorgesehen, so dass die Strukturschicht 84 in vordefinierte Bruchstücke zerbricht, wenn die Mehrschichtfolie in stärkerer Weise gebogen wird. Bildet der Grundkörper in einem Bereich eine Kante mit einem engen Krümmungsradius aus, so führt dies dazu, dass auch die darüberliegende Strukturschicht in diesem Bereich stark gekrümmt wird und damit die Strukturschicht in vordefinierte Bruchstücke zerbricht.

Derartige Soll-Bruchstellen in der Strukturschicht können zum einen durch die Gestaltung der in die Strukturschicht eingeprägten räumlichen Struktur erzielt werden. So können hier in bestimmten Abständen Rillen in die Strukturschicht eingeprägt werden, die als Soll-Bruchstellen wirken. Derartige Rillen können auch durch Laser-Ablation oder durch ein photochemisches Ablationsverfahren erzielt werden. Weiter besteht die Möglichkeit, die Strukturschicht aus einem Replizierlack herzustellen, in dem Nano-Partikel oder mikroskopisch grosse Partikel eingebracht sind, die zu einer vordefinierten Versprödung der Strukturschicht führen und Soll-Bruchstellen definieren. So ist es beispielsweise möglich, Nano-SO₂-Partikel oder mikroskopische grosse Cu-Partikel in den Replizierlack einzubringen. Als vorteilhaft hat sich hierbei der Einsatz von MetallPartikeln oder Metalloxid-Partikeln erwiesen.

Derartige Partikel können hierbei zusätzlich zur Farbgebung der Strukturschicht beitragen.

Die Soll-Bruchstellen können hierbei so angeordnet sein, dass der durch die Struktur erzeugte optische Effekt durch das Brechen der Strukturschicht im bereich der Soll-Bruchstellen nicht beeinträchtigt wird. Hierzu werden die Soll-Bruchstellen derart auf die räumliche Oberflächenstruktur abgestimmt, dass zusammenhängende Bild-Informationen in einem Bruchstück verbleiben. So werden beispielsweise Soll-Bruchstellen an Übergängen zwischen Bereichen der räumlichen Struktur vorgesehen, die unterschiedlichen Bild-Pixeln zugeordnet sind.

Weiter ist es auch möglich, dass die Soll-Bruchstellen so angeordnet sind, dass der optische Effekt in Bereichen, in denen die Strukturschicht zerbrochen ist, nicht mehr erzeugt wird. Dies kann beispielsweise dadurch erzielt werden, dass eine hohe Anzahl von Soll-Bruchstellen vorgesehen wird, die eine Zufalls-Verteilung aufweisen und damit die Erzeugung eines optischen Effekts durch die räumliche Struktur unterbinden. Dies kann beispielsweise durch eine starke Versprödung der Strukturschicht durch Zumischung von Nanö-Partikeln realisiert werden.

Weiter ist es auch möglich, dass die Reflexionsschicht Soll-Bruchstellen aufweist, so dass die Reflexionsschicht in Bereichen, in denen die Krümmung der Reflexionsschicht einen Grenzwert überschreitet, definiert zerbricht, wodurch der durch die Struktur erzeugte optische Effekt in diesem Bereich ausgelöscht wird. Dies kann dadurch erreicht werden, dass die zusammenhängende Reflexionsschicht eine Vielzahl von zufällig verteilten Soll-Bruchstellen aufweist, so dass die Reflexionsschicht bei Überschreiten eines bestimmten Krümmungsradius in eine Vielzahl statistisch verteilter, kleinster Reflexionsflächen zerbricht. Hierdurch wird in den Krümmungsbereichen eine ausreichend gerichtete Reflexion des einfallenden Lichtes nicht mehr gewährleistet, so dass die von der optisch wirksamen räumlichen Struktur erzeugten optischen Effekte für den Betrachter nicht mehr erkennbar sind. Beispielsweise werden hierbei diffraktive Effekte durch das gezieltes feinkörnige Zerbrechen der Reflexionsschicht und die hierdurch auftretenden Streueffekte so sehr abgeschwächt, dass diese Effekte für den menschlichen Betrachter kaum oder überhaupt nicht mehr sichtbar sind.

Eine Reflexionsschicht, die über eine derartige Ausstattung mit Soll-Bruchstellen verfügt, wird beispielsweise durch unterschiedliches mechanisches Verhalten von Reflexionsschicht und vor und/oder nachfolgenden Schichten erzielt. Das Bruch- und/oder Dehnungsverhalten der Reflexionsschicht im Vergleich zu der vor und/oder nachfolgenden Schicht oder Schichten wird so gewählt, dass ab einem bestimmten, durch die mechanischen Eigenschaften vordefinierten Biegeradius, Brüche in der spröderen Reflexionsschicht auftreten. Hierbei ist es auch möglich, eine weitere Zwischenschicht vorzusehen, die der Bereitstellung eines derartigen vordefinierten Unterschieds im Bruch- und Dehnungsverhalten dient.

Weiter sind auch die bereits in Bezug auf die Strukturschicht offenbarten Maßnahmen zur Bereitstellung der Soll-Bruchstellen (mechanisch vordefinierte Schwächung, Beimischung von Partikel) auf die Reflexionsschicht oder den die Reflexionsschicht bildenden Mehrschichtkörper anwendbar.

Weiter ist es vorteilhaft, zwischen der Strukturschicht und der Reflexionsschicht eine thermisch isolierende Schicht vorzusehen, die im weiteren auch über einen höheren Brechungsindex als die Strukturschicht verfügt. Beispielsweise ist es möglich, hierzu MₓO_{y}-Schichten (MₓO_{y} : x; y [0,1 bis 8]; M : Element) einzusetzen. Durch derartige Schichten wird zum einen eine Erhöhung der Tiefenschärfe und zum anderen ein besserer thermischer Schutz der Strukturschicht erzielt.

## Patentansprüche

1. Mehrschichtfolie (3, 4, 52, 62) zur Herstellung eines dekorierten Gegenstandes, der einen mit der Mehrschichtfolie dekorierten Grundkörper mit gekrümmten Oberflächen-Bereichen aufweist, wobei die Mehrschichtfolie (3, 4, 52, 62) eine IMD-Folie oder eine tiefziehfähige Folie ist, die bei der Herstellung des dekorierten Gegenstandes entsprechend einer Krümmung des Grundkörpers des dekorierten gegenstandes verformbar ist,
**dadurch gekennzeichnet,**
**dass** die IMD-Folie oder tiefziehfähige eine transparente Strukturschicht (35, 44, 54, 64), die eine einen optisch wahrnehmbaren Effekt erzeugende räumliche Struktur (39, 49) aufweist, und eine in Betrachtungsnchtung unterhalb der Strukturschicht angeordnete Reflexionsschicht (37, 46, 56, 66) aufweist.

2. Mehrschichtfolie nach Anspruch 1,
**dadurch gekennzenchnet,**
dass der optische Effekt der räumlichen Struktur (39,49) musterförmig mittels einer zwischen der Strukturschicht (35, 44, 74) und der Reflexionsschicht (37, 46. 73) angeordneten, musterförmig ausgeformten Zwischenschicht (36, 45, 76) und/oder mittels einer musterförmigen Entfernung, insbesondere Demetallisierung, der Reflexionsschicht (56, 66), in Bereichen ausgelöscht ist, in denen die Krümmung des mit der Mehrschichtfolie zu dekorierenden Grundkörpers und somit eine Krümmung der räumlichen Struktur (39, 49) am dekorierten Gegenstand einen Grenzwert überschreitet, wobei
a) der Grenzwert entweder ein Krümmungsradius ist, bei dem sich für einen Betrachter des dekorierten Gegenstandes sichtbare Veränderungen des optischen Effekts der räumlichen Struktur durch die Verbiegung der Strukturschicht ergeben oder
b) der Grenzwert ein Krümmungsradius ist, bei dem Brüche in der Strukturschicht auftreten.

3. Mehrschichtfolie nach Anspruch 2,
**dadurch gekennzeichnet,**
**daß** die Zwischenschicht aus ein oder mehreren Löschlackschichten (36, 76) besteht, die aus einem transparenten Material bestehen und die Struktur der Strukturschicht (35, 74) musterförmig nivellieren.

4. Mehrschichtfolie nach einem der Ansprüche 2 oder 3,
**dadurch gekennzeichnet,**
**daß** die Zwischenschicht aus ein oder mehreren Löschlackschichten (45) besteht, die aus einem opaken Material bestehen.

5. Mehrschichtfolie nach einem der Ansprüche 2 bis 4,
**dadurch gekennzeichnet,**
**daß** die Zwischenschicht eine Maskierungsschicht (55) aufweist, die partiell mit dem nachapplizierten Teil der Reflexionsschicht (56) entfernt ist.

6. Mehrschichtfolie nach einem der Ansprüche 2 bis 5.
**dadurch gekennzeichnet,**
**daß** die Zwischenschicht aus einem thermoplastischen Material besteht.

7. Mehrschichtfolie nach einem der Ansprüche 2 bis 6,
**dadurch gekennzeichnet,**
**dass** die Biegsamkeit der Zwischenschicht ungleich der der Strukturschicht ist.

8. Mehrschichtfolie nach einem der Ansprüche 2 bis 7,
**dadurch gekennzeichnet,**
**dass** die Zwischenschicht und/oder die Strukturschicht eingefärbt ist.

9. Mehrschichtfolie nach einem der vorhergehenden Ansprüche,
**dadurch gekennzeichnet,**
**dass** die Strukturschicht Soll-Bruchstellen aufweist, so dass die Strukturschicht in Bereichen, in denen eine Krümmung der Strukturschicht in einem gekrümmten Oberflächen-Bereich einen Grenzwert überschreitet, definiert zerbricht.

10. Mehrschichtfolie nach Anspruch 9,
**dadurch gekennzeichnet,**
**dass** die Soll-Bruchstellen so angeordnet sind, dass der durch die Struktur erzeugte optische Effekt durch das Brechen der Strukturschicht im Bereich der Soll-Bruchstelle nicht beeinträchtigt wird.

11. Mehrschichtfolie nach Anspruch 9,
**dadurch gekennzeichnet,**
**daß** die Soll-Bruchstellen so angeordnet sind, dass der durch die Struktur erzeugte optische Effekt in Bereichen, in denen die Strukturschicht zerbricht, nicht mehr erzeugt wird.

12. Mehrschichtfolie nach einem der vorhergehenden Ansprüche,
**dadurch gekennzeichnet,**
**dass** die Reflexionsschicht Soll-Bruchstellen aufweist, so dass die Reflexionsschicht in Bereichen, in denen eine Krümmung der Strukturschicht in gekrümmten Oberflächen-Bereichen einen Grenzwert überschreitet, definiert zerbricht, wodurch der durch die Struktur erzeugte optische Effekt in diesen Bereichen ausgelöscht wird.

13. Mehrschichtfolie nach einem der vorhergehenden Ansprüche,
**dadurch gekennzeichnet,**
**dass** zwischen der Strukturschicht und der Reflexionsschicht eine weitere Schicht mit höherem Brechungsindex als die Strukturschicht angeordnet ist.

14. Mehrschichtfolie nach Anspruch 13,
**dadurch gekennzeichnet,**
**dass** die weitere Schicht aus einem Material besteht, das thermisch isolierende Eigenschaften besitzt.

15. Mehrschichtfolie nach Anspruch 13 oder Anspruch 14,
**dadurch gekennzeichnet,**
**dass** die Reflexionsschicht in einem fensterförmigen Bereich entfernt ist.

16. Mehrschichtfolie nach einem der vorhergehenden Ansprüche,
**dadurch gekennzeichnet,**
**dass** die Strukturschicht (74) aus einem thermoplastischen Kunststoff-Material besteht, in das die räumliche Struktur eingeprägt ist.

17. Mehrschichtfolie nach einem der vorhergehenden Ansprüche,
**dadurch gekennzeichnet,**
**dass** die Struktur eine sichtbare, nicht beugungsoptisch wirkende Struktur einer Rauhtiefe in der Größenordnung zwischen 0,8 und 10 µm aufweist.

18. Mehrschichtfolie nach einem der vorhergehenden Ansprüche,
**dadurch gekennzeichnet,**
**dass** die Struktur eine beugungsoptisch wirksame diffraktive Struktur aufweist.

19. Mehrschichtfolie nach einem der vorhergehenden Ansprüche,
**dadurch gekennzeichnet,**
**dass** die Reflexionsschicht eine Metallschicht, eine Schicht aus einem Metalloxid oder einem Metallsulfid, oder eine Schicht aus einem reflektierenden Kunststoff ist.

20. Dekorierter Gegenstand (1, 2, 7), insbesondere Handyschale oder Handy-Fenster, mit einem Grundkörper (13, 22, 71), der gekrümmte Oberflächenbereiche aufweist, und mindestens einem im Bereich einer oder mehrere Krümmungen der Oberfläche des Grundkörpers angeordneten dekorativen Element (12, 21, 24, 78),
**dadurch gekennzeichnet,**
**dass** das dekorative Element (12, 21, 78) von einer Mehrschichtfolie gemäß einem der Ansprüche 1 bis 19 gebildet ist, die bei der Herstellung des Grundkörpers (13, 22, 71) entsprechend der ein oder mehreren Krümmungen verformt wird.

21. Dekorierter Gegenstand (1, 2, 7) nach Anspruch 20,
**dadurch gekennzeichnet,**
- dass der optische Effekt der räumlichen Struktur (39, 49) musterförmig mittels einer zwischen der Strukturschicht (35, 44, 74) und der Reflexionsschicht (37, 46. 73) angeordneten, musterförmig ausgeformten Zwischenschicht (36, 45, 76) und/oder mittels einer musterförmigen Entfernung, insbesondere Demetallisierung, der Reflexionsschicht (56, 66), in Bereichen ausgelöscht ist, in denen die Krümmung der Struktur einen Grenzwert überschreitet.

22. Dekorierter Gegenstand (1., 2, 7) nach Anspruch 21,
**dadurch gekennzeichnet,**
**dass** der Grenzwert der Krümmungsradius ist bei dem sich für einen Betrachter sichtbare Veränderungen des optischen Effekts der räumlichen Struktur durch die Verbiegung der Strukturschicht ergeben.

23. Dekorierter Gegenstand (7) nach Anspruch 22,
**dadurch gekennzeichnet,**
**dass** der Grenzwert ein Krümmungsradius ist, bei dem Brüche in der Strukturschicht auftreten.

24. Dekorierter Gegenstand (7) nach einem der Ansprüche 21 bis 23,
**dadurch gekennzeichnet,**
**dass** die Strukturschicht Soll-Bruchstellen aufweist, so dass die Strukturschicht in Bereichen, in denen die Krümmung der Strukturschicht den Grenzwert überschreitet, definiert zerbricht.

25. Dekorierter Gegenstand (7) nach Anspruch 24,
**dadurch gekennzeichnet,**
**dass** die Soll-Bruchstellen so angeordnet sind, dass der durch die Struktur erzeugte optische Effekt durch das Brechen der Strukturschicht im Bereich der Soll-Bruchstelle nicht beeinträchtigt wird.

26. Dekorierter Gegenstand (7) nach Anspruch 24,
**dadurch gekennzeichnet,**
**dass** die Soll-Bruchstellen so angeordnet sind, dass der durch die Struktur erzeugte optische Effekt in Bereichen, in denen die Strukturschicht zerbrochen ist, nicht mehr erzeugt wird.

27. Dekorierter Gegenstand (7) nach einem der Ansprüche 20 bis 26,
**dadurch gekennzeichnet,**
**dass** die Ref!exionsschicht Soll Bruchstellen aufweist, so dass die Reflexionsschicht in Bereichen, in denen die Krümmung der Strukturschicht einen Grenzwert überschreitet, definiert zerbricht, wodurch der durch die Struktur erzeugte optische Effekt in diesen Bereichen ausgelöscht wird.

28. Verwendung einer Mehrschichtfolie nach einem der Ansprüche 1 bis 19 in einem Inmold-Spritzgussverfahren oder einem Tiefziehverfahren zur Dekoration eines Grundkörpers mit gekümmten Oberflächenbereichen zumindest im Bereich einer oder mehrerer Krümmungen der Oberfläche des Grundkörpers.

## Claims

1. Multilayer film (3, 4, 52, 62) for producing a decorated object which has a base body decorated with the multilayer film and having curved surface regions, the multilayer film (3, 4, 52, 62) being an IMD film or a deep-drawable film which can be deformed during production of the decorated object in accordance with a curvature of the base body of the decorated object, **characterized in that** the IMD film or deep-drawable film has a transparent structural layer (35, 44, 54, 64) which has a spatial structure (39, 49) producing an optically perceptible effect, and has a reflection layer (37, 46, 56, 66) arranged below the structural layer in the viewing direction.

2. Multilayer film according to Claim 1, **characterized in that** the optical effect of the spatial structure (39, 49) is extinguished in a patternwise fashion by means of a patternwise shaped interlayer (36, 45, 76) arranged between the structural layer (35, 44, 74) and the reflection layer (37, 46, 73), and/or is extinguished by means of a patternwise removal, in particular demetallization, of the reflection layer (56, 66) in regions where the curvature of the base body to be decorated with the multilayer film, and thus a curvature of the spatial structure (39, 49) on the decorated object, exceeds a limiting value,
a) the limiting value either being a radius of curvature, in the case of which variations in the optical effect of the spatial structure which are visible to a viewer of the decorated object result from the bending of the structural layer, or
b) the limiting value being a radius of curvature, in the case of which fractures occur in the structural layer.

3. Multilayer film according to Claim 2, **characterized in that** the interlayer consists of one or more extinguishing lacquer layers (36, 76) which consist of a transparent material and which level the structure of the structural layer (35, 74) in a patternwise fashion.

4. Multilayer film according to either of Claims 2 and 3, **characterized in that** the interlayer consists of one or more extinguishing lacquer layers (45) which consist of an opaque material.

5. Multilayer film according to one of Claims 2 to 4, **characterized in that** the interlayer has a masking layer (55) which is partially removed with the reapplied part of the reflection layer (56).

6. Multilayer film according to one of Claims 2 to 5, **characterized in that** the interlayer consists of a thermoplastic material.

7. Multilayer film according to one of Claims 2 to 6, **characterized in that** the flexibility of the interlayer is different from that of the structural layer.

8. Multilayer film according to one of Claims 2 to 7, **characterized in that** the interlayer and/or the structural layer is coloured.

9. Multilayer film according to one of the preceding claims, **characterized in that** the structural layer has rupture joints such that the structural layer ruptures in a defined fashion in regions where a curvature of the structural layer exceeds a limiting value in a curved surface region.

10. Multilayer film according to Claim 9, **characterized in that** the rupture joints are arranged such that the optical effect produced by the structure is not impaired by the rupture of the structural layer in the region of the rupture joint.

11. Multilayer film according to Claim 9, **characterized in that** the rupture joints are arranged such that the optical effect produced by the structure is no longer produced in regions where the structural layer ruptures.

12. Multilayer film according to one of the preceding claims, **characterized in that** the reflection layer has rupture joints such that the reflection layer ruptures in a defined fashion in regions where a curvature of the structural layer exceeds a limiting value in curved surface regions, the result being that the optical effect produced by the structure is extinguished in these regions.

13. Multilayer film according to one of the preceding claims, **characterized in that** a further layer with a higher refractive index than the structural layer is arranged between the structural layer and the reflection layer.

14. Multilayer film according to Claim 13, **characterized in that** the further layer consists of a material which has thermally insulating properties.

15. Multilayer film according to Claim 13 or Claim 14, **characterized in that** the reflection layer is removed in a window-shaped region.

16. Multilayer film according to one of the preceding claims, **characterized in that** the structural layer (74) consists of a thermoplastic polymer material into which the spatial structure is impressed.

17. Multilayer film according to one of the preceding claims, **characterized in that** the structure has a visible structure, not active in terms of optical diffraction, with a surface roughness of the order of magnitude of between 0.8 and 10 µm.

18. Multilayer film according to one of the preceding claims, **characterized in that** the structure has a diffractive structure which is effective in terms of optical diffraction.

19. Multilayer film according to one of the preceding claims, **characterized in that** the reflection layer is a metal layer, a layer made from a metal oxide or a metal sulphide, or a layer made from a reflecting plastic.

20. Decorated object (1, 2, 7), in particular a mobile-phone shell or mobile-phone window, comprising a base body (13, 22, 71), which has curved surface regions, and at least one decorative element (12, 21, 24, 78) arranged in the region of one or more curvatures of the surface of the base body, **characterized in that** the decorative element (12, 21, 78) is formed by a multilayer film in accordance with one of Claims 1 to 19, which multilayer film is deformed in accordance with the one or more curvatures during the production of the base body (13, 22, 71).

21. Decorated object (1, 2, 7) according to Claim 20, **characterized in that** the optical effect of the spatial structure (39, 49) is extinguished in a patternwise fashion by means of a patternwise shaped interlayer (36, 45, 76) arranged between the structural layer (35, 44, 74) and the reflection layer (37, 46, 73), and/or is extinguished by means of a patternwise removal, in particular demetallization, of the reflection layer (56, 66) in regions where the curvature of the structure exceeds a limiting value.

22. Decorated object (1, 2, 7) according to Claim 21, **characterized in that** the limiting value is the radius of curvature in the case of which variations in the optical effect of the spatial structure which are visible to a viewer result from the bending of the structural layer.

23. Decorated object (7) according to Claim 22, **characterized in that** the limiting value is a radius of curvature in the case of which fractures occur in the structural layer.

24. Decorated object (7) according to one of Claims 21 to 23, **characterized in that** the structural layer has rupture joints such that the structural layer ruptures in a defined fashion in regions where the curvature of the structural layer exceeds the limiting value.

25. Decorated object (7) according to Claim 24, **characterized in that** the rupture joints are arranged such that the optical effect produced by the structure is not impaired by the rupture of the structural layer in the region of the rupture joint.

26. Decorated object (7) according to Claim 24, **characterized in that** the rupture joints are arranged such that the optical effect produced by the structure is no longer produced in regions where the structural layer is ruptured.

27. Decorated object (7) according to one of Claims 20 to 26, **characterized in that** the reflection layer has rupture joints such that the reflection layer ruptures in a defined fashion in regions where the curvature of the structural layer exceeds a limiting value, the result being that the optical effect produced by the structure is extinguished in these regions.

28. The use of a multilayer film according to one of Claims 1 to 19 in an in-mould injection moulding method or a deep-drawing method for decorating a base body having curved surface regions at least in the region of one or more curvatures of the surface of the base body.

## Revendications

1. Film multicouches (3,4, 52, 62) servant à la fabrication d'un objet décoré présentant un corps de base avec une surface partiellement courbée, décoré avec le film multicouches, sachant que le film multicouches (3,4, 52, 62) est un film IMD ou film d'emboutissage, qui lors de la fabrication de l'objet décoré peut être déformé en fonction de la structure du corps de base de l'objet décoré,
**caractérisé en ce que**
le film IMD ou le film d'emboutissage présente une couche structurée (35, 44, 54, 64) qui présente une structure spatiale (39, 49) créant un effet d'optique perceptible et une couche réfléchissante (37, 46, 56, 66) disposée en dessous de la couche structurée dans le sens d'observation.

2. Film multicouches selon la revendication 1
**caractérisé en ce que**
l'effet d'optique de la structure spatiale (39, 49) est effacé et prend la forme du motif à certains endroits où le gauchissement du corps de base devant être décoré avec le film multicouches et ainsi le gauchissement de la structure spatiale (39, 49) sur l'objet décoré dépasse une limite, à l'aide d'une couche intermédiaire (36, 45, 76) déformée selon la forme du motif disposée entre la couche structurée (35, 44, 74) et la couche réfléchissante (37, 46, 73) et/ou à l'aide d'une suppression à la forme du motif, en particulier une démétalisation de la couche réfléchissante (56, 66), sachant que
a) la limite est soit un rayon de courbe en raison duquel l'observateur de l'objet décoré perçoit des modifications perceptibles de l'effet d'optique de la structure spatiale en raison de la courbure de la couche structurée, soit
b) un rayon de courbe en raison duquel des ruptures apparaissent dans la couche structurée.

3. Film multicouches selon la revendication 1
**caractérisé en ce que**
la couche intermédiaire est constituée d'une ou plusieurs couches de laque d'effacement (36, 76) qui elles-mêmes sont constituées d'un matériau transparent et qui nivellent à la forme du motif la structure de la couche structurée (35, 74).

4. Film multicouches selon l'une des revendications 2 ou 3
**caractérisé en ce que**
la couche intermédiaire est constituée d'une ou plusieurs couches de laque d'effacement (45) qui elles-mêmes sont constituées d'un matériau opaque.

5. Film multicouches selon l'une des revendications 2 à 4
**caractérisé en ce que**
la couche intermédiaire présente une couche de masquage (55) qui est partiellement supprimée avec la partie de la couche réfléchissante (56) appliquée postérieurement.

6. Film multicouches selon l'une des revendications 2 à 5
**caractérisé en ce que**
la couche intermédiaire est constituée d'un matériau thermoplastique.

7. Film multicouches selon l'une des revendications 2 à 6
**caractérisé en ce que**
la flexibilité de la couche intermédiaire n'est pas identique à celle de la couche structurée.

8. Film multicouches selon l'une des revendications 2 à 7
**caractérisé en ce que**
la couche intermédiaire et/ou la couche structurée est/sont colorées.

9. Film multicouches selon l'une des revendications précédentes
**caractérisé en ce que**
la couche structurée présente des points de rupture requis de telle sorte que la couche structurée rompt de façon définie à des endroits où un gauchissement de la couche structurée dépasse une limite à un endroit courbé de la surface.

10. Film multicouches selon la revendication 9
**caractérisé en ce que**
les points de rupture requis sont disposés de telle sorte que l'effet d'optique obtenu par la structure n'est pas compromis par la rupture de la couche structurée au niveau des points de rupture requis.

11. Film multicouches selon la revendication 9
**caractérisé en ce que**
les points de rupture requis sont disposés de telle sorte que l'effet d'optique obtenu par la structure n'est plus obtenu à des endroits ou la couche structurée rompt.

12. Film multicouches selon l'une des revendications précédentes
**caractérisé en ce que**
la couche réfléchissante présente des points de rupture requis de telle sorte que la couche réfléchissante rompt de façon définie à des endroits où le gauchissement de la couche structurée dépasse une limite à des courbés de la surface, provoquant ainsi une suppression de l'effet d'optique obtenu par la structure à ces endroits.

13. Film multicouches selon l'une des revendications précédentes
**caractérisé en ce que**
une autre couche présentant un index de rupture supérieur à celui de la couche structurée, est disposée entre la couche structurée et la couche réfléchissante.

14. Film multicouches selon la revendication 13
**caractérisé en ce que**
cette autre couche est constituée d'un matériau possédant des propriétés d'isolation thermique.

15. Film multicouches selon la revendication 13 ou la revendication 14
**caractérisé en ce que**
la couche réfléchissante est supprimée à un endroit en forme de fenêtre.

16. Film multicouches selon l'une des revendications précédentes
**caractérisé en ce que**
la couche structurée (74) est constituée d'un matériau thermoplastique dans lequel la structure spatiale est estampée.

17. Film multicouches selon l'une des revendications précédentes
**caractérisé en ce que**
la structure présente la structure perceptible n'ayant pas un effet d'optique diffracté d'une profondeur d'aspérités comprise entre de 0,8 et 10 µm.

18. Film multicouches selon l'une des revendications précédentes
**caractérisé en ce que**
la structure présente une structure diffractée ayant un effet d'optique diffracté.

19. Film multicouches selon l'une des revendications précédentes
**caractérisé en ce que**
la structure réfléchissante est une couche métallique , une couche en oxyde de métal ou sulfure de métal, ou une couche en plastique réfléchissant.

20. Objet décoré (1, 2, 7), en particulier une coque de téléphone portable ou une fenêtre de téléphone portable, avec un corps de base (13, 22, 71) présentant des zones de surface courbés et au moins un élément décoratif (12, 21, 24, 78) disposé au niveau d'une ou plusieurs courbes de la surface du corps de base,
**caractérisé en ce que**
l'élément décoratif (12, 21, 78) est formé par un film multicouches conforme à l'une des revendications 1 à 19 qui lors de la fabrication du corps de base (13, 22, 71) est déformé conformément à la courbes ou aux courbes.

21. Objet décoré (1, 2, 7) selon la revendication 20,
**caractérisé en ce que**
l'effet d'optique de la structure spatiale (39, 49) est effacé et prend la forme du motif à certains endroits où le gauchissement de la structure dépasse une limite, à l'aide d'une couche intermédiaire (36, 45, 76) déformée selon la forme du motif disposée entre la couche structurée (35, 44, 74) et la couche réfléchissante (37, 46, 73) et/ou à l'aide d'une suppression à la forme du motif, en particulier une démétalisation de la couche réfléchissante (56, 66).

22. Objet décoré (1, 2, 7) selon la revendication 21,
**caractérisé en ce que**
la limite est le rayon de courbe à partir duquel l'observateur perçoit des modifications de l'effet d'optique de la structure spatiale en raison de la courbure de la couche structurée.

23. Objet décoré (7) selon la revendication 22,
**caractérisé en ce que**
la limite est un rayon de courbe à partir duquel des ruptures apparaissent dans la couche structurée.

24. Objet décoré (7) selon la revendication 20,
**caractérisé en ce que**
la couche structurée présente des points de rupture requis de telle sorte que la couche structurée rompt de façon définie à des endroits où le gauchissement de la courbe structurée dépasse la limite.

25. Objet décoré (1, 2, 7) selon la revendication 24,
**caractérisé en ce que**
les points de rupture requis sont disposés de telle sorte que l'effet d'optique obtenu par la structure n'est pas compromis par la rupture de la couche structurée au niveau des points de rupture requis.

26. Objet décoré (1, 2, 7) selon la revendication 24,
**caractérisé en ce que**
les points de rupture requis sont disposés de telle sorte que l'effet d'optique obtenu par la structure n'est plus obtenu aux endroits où la couche structurée est rompue.

27. Objet décoré (1, 2, 7) selon l'une des revendications 20 à 26,
**caractérisé en ce que**
la couche réfléchissante présente des points de rupture requis de telle sorte que la couche réfléchissante rompt de façon définie à des endroits où le gauchissement de la couche structurée dépasse une limite, provoquant ainsi la suppression de l'effet d'optique obtenu par la structure à ces endroits.

28. Utilisation d'un film multicouches selon l'une des revendications 1 à 19 dans un procédé de moulage par injection Inmold ou dans un procédé d'emboutissage pour décorer un corps de base avec une surface partiellement courbée au moins au niveau d'une ou plusieurs courbes de la surface du corps de base.
